(19) Europäisches Patentamt
European Patent Office
Office européen des brevets

(11) EP 3 734 735 A1

(12) EUROPEAN PATENT APPLICATION

(43) Date of publication:
04.11.2020 Bulletin 2020/45

(51) Int Cl.:
*H01M 10/052* (2010.01) *H01M 10/0567* (2010.01)

(21) Application number: 20170221.4

(22) Date of filing: 17.04.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 30.04.2019 KR 20190050542

(71) Applicant: SK Innovation Co., Ltd.
Seoul 03188 (KR)

(72) Inventors:
- Lee, Dong Hoon
  34124 Daejeon (KR)
- Kim, Jae Youn
  34124 Daejeon (KR)
- Na, Hee Soo
  34124 Daejeon (KR)
- Yang, Jin Haek
  34124 Daejeon (KR)
- Cho, In Haeng
  34124 Daejeon (KR)

(74) Representative: Stolmár & Partner
Patentanwälte PartG mbB
Blumenstraße 17
80331 München (DE)

(54) LITHIUM SECONDARY BATTERY

(57) Provided is a lithium secondary battery including: a cathode including a cathode current collector and a cathode active material layer positioned on the cathode current collector; a nonaqueous electrolyte; and an anode, wherein the cathode active material layer includes a lithium transition metal oxide particle, and the lithium transition metal oxide particle contains a nickel (Ni) atom in an amount of 60 mol% or more with respect to a total of 100 mol% of transition metal atoms, and the nonaqueous electrolyte contains a polyethylene glycol-based polymer.

EP 3 734 735 A1

## Description

### TECHNICAL FIELD

The following disclosure relates to a lithium secondary battery.

### BACKGROUND

In accordance with technology development and an increase in demand for mobile devices, the demand for secondary batteries as energy sources has been rapidly increased. Among these secondary batteries, a lithium secondary battery having a high energy density, a high operating potential, a long cycle life, and a low self-discharge rate has been commercialized and widely used.

In addition, as interests in environmental problems have recently increased, extensive studies on an electric vehicle (EV), a hybrid electric vehicle (HEV), and the like that may replace vehicles using fossil fuels such as a gasoline vehicle and a diesel vehicle, which are major contributors to air pollution, have been conducted.

For the lithium secondary battery that may be used in such an electric vehicle, hybrid electric vehicle, and the like, it is required to have a high energy density, characteristics capable of exhibiting a large power in short time, and long-term lifespan characteristics.

A lithium cobalt oxide ($LiCoO_2$) having a layered structure according to the related art has been often used as a material for a cathode of the lithium secondary battery. However, the lithium cobalt oxide has a low structural stability, a low energy density, and a low competitive price due to limitation of resources of cobalt.

Accordingly, a nickel-based cathode active material that is inexpensive due to the relatively large amount thereof and may implement a high energy density has been considered. As a content of nickel is high, a high energy density may be implemented; however, when a battery is used for a long period of time, cycle characteristics rapidly deteriorate, and in a high temperature environment, swelling occurs due to gas generated in the battery, and a thermal stability deteriorates due to a low chemical stability.

Therefore, there is a need for a lithium secondary battery of which swelling, explosion, and deterioration in lifespan characteristics caused by gas generated in the battery may be prevented.

### SUMMARY

An embodiment of the present invention is directed to providing a lithium secondary battery of which swelling, explosion, and deterioration in lifespan characteristics caused by gas generated in the battery in a high temperature environment may be prevented, while adopting a high nickel-based cathode active material having a high nickel content.

In one general aspect, a lithium secondary battery includes: a cathode including a cathode current collector and a cathode active material layer positioned on the cathode current collector; a nonaqueous electrolyte; and an anode, wherein the cathode active material layer includes a lithium transition metal oxide particle, and the lithium transition metal oxide particle contains a nickel (Ni) atom in an amount of 60 mol% or more with respect to a total of 100 mol% of transition metal atoms, and the nonaqueous electrolyte contains a polyethylene glycol-based polymer.

An electrode density of the cathode may be 3.3 g/cc to 4.2 g/cc, and specifically, may be 3.5 g/cc to 3.8 g/cc.

The lithium transition metal oxide particle may contain the nickel (Ni) atom in an amount of 70 mol% or more, 80 mol% or more, or 88 mol% or more, with respect to the total of 100 mol% of the transition metal atoms.

After the lithium secondary battery is charged in a constant current (CC) mode up to 4.2 V with a current of 0.3 C-rate at 25°C, shifts to a constant voltage (CV) mode, is completely charged under a cut-off condition of a current amount of 1/20 C, and is stored at 60°C for one week, an amount of carbon dioxide generated may be 50% or less of a total amount of gas generated in the battery.

After the lithium secondary battery is charged in a constant current (CC) mode up to 4.2 V with a current of 0.3 C-rate at 25°C, shifts to a constant voltage (CV) mode, is completely charged under a cut-off condition of a current amount of 1/20 C, and is stored at 60°C for one week, an amount of carbon dioxide generated in the battery may be decreased by 75% or more of an amount of carbon dioxide generated when the polyethylene glycol-based polymer is not contained in the nonaqueous electrolyte.

A crack may be present on a surface of the lithium transition metal oxide particle, and the polyethylene glycol-based polymer may be present in the crack.

The polyethylene glycol-based polymer may contain a compound represented by the following Formula 1.

[Formula 1]

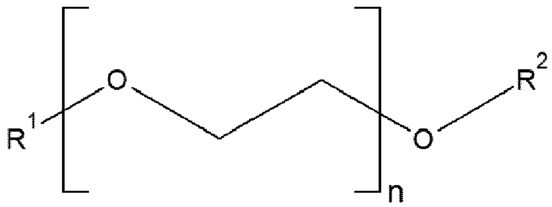

(In Formula 1, n is an integer of 5 to 100, $R^1$ is hydrogen or a C1 to C4 linear or branched alkyl group, and $R^2$ is hydrogen or a C1 to C4 linear or branched alkyl group.)

A number average molecular weight ($M_n$) of the polyethylene glycol-based polymer may be 50 g/mol to 2,000 g/mol.

The polyethylene glycol-based polymer may contain polyethylene glycol (PEG), polyethylene glycol dimethyl ether (PEGDME), or a mixture thereof.

The polyethylene glycol-based polymer may contain polyethylene glycol dimethyl ether (PEGDME).

A content of the polyethylene glycol-based polymer may be 0.1 wt% to 10 wt% with respect to a total of 100 wt% of the nonaqueous electrolyte. The cathode active material layer may include a lithium transition metal oxide particle represented by the following Formula 2.

[Formula 2] $Li_aNi_{1-x-y}CO_xMn_yM_zO_b$

(In Formula 2, $0.5 \leq a \leq 1.3$, $1.9 \leq b \leq 2.1$, $0 \leq x \leq 0.4$, $0 \leq y \leq 0.4$, and $0 \leq x+y \leq 0.4$, M is one or more materials selected from the group consisting of Al, Mg, Zr, and B, and $0 \leq z \leq 0.2$.)

## DETAILED DESCRIPTION OF EMBODIMENTS

Unless otherwise defined, all terms (including technical and scientific terms) used in the present specification have the same meaning as commonly understood by those skilled in the art to which the present invention pertains. Throughout the present specification, unless explicitly described to the contrary, "comprising" any components will be understood to imply the inclusion of other elements rather than the exclusion of any other elements. In addition, unless the context clearly indicates otherwise, a singular form includes a plural form.

It will be understood in the present specification that when an element such as a layer, a film, a region, or a substrate is referred to as being "on" another element, it may be directly on the other element or intervening elements may also be present.

In addition, in the present specification, the term "above" or "on" does not necessarily mean that any element is positioned on an upper side based on a gravity direction, but means that any element is positioned above or below a target portion.

Unless otherwise defined in the present specification, the term "room temperature" refers to 25°C.

In order to increase an energy density of a lithium secondary battery, it is required that a cathode active material having a high capacity is used, and the cathode is rolled to have a higher density so as to provide a large amount of energy per unit volume. In order to increase a capacity of a nickel cobalt manganese (NCM)-based cathode active material, it is required to increase a content of nickel in the cathode active material; however, as the content of nickel is increased, the cathode active material becomes chemically unstable and is thus likely to be reacted with an electrolyte. For example, when the battery is exposed to a high temperature environment of 40°C or higher, a large amount of carbon dioxide ($CO_2$) may be generated by a reaction between the high nickel-based cathode active material and the electrolyte, and the amount of gas generated in the battery may thus be increased.

Furthermore, when the cathode is rolled to have a higher density in order to increase the energy density of the battery, cathode active material particles are crushed in a rolling process, and a plurality of cracks may thus be generated in the cathode active material. In this case, the generated cracks accelerate a side reaction between the cathode active material and the electrolyte, and the amount of gas generated in the battery in a high temperature environment may thus be rapidly increased.

The gas permeates into unit batteries, which causes swelling of the lithium secondary battery. Accordingly, a resistance of the battery may be increased due to an increase in distance between interfaces of an electrode and a separator. Furthermore, a lifespan of the battery may rapidly deteriorate. In addition, in a case where gas is excessively generated, an internal pressure of a pouch is increased, and a risk of battery explosion may thus be significantly increased.

When a cathode including a high nickel-based cathode active material is adopted, carbon dioxide generated from the cathode is the main cause of the increase in the amount of gas generated in the battery. In order to prevent the above problems, it is required to suppress the carbon dioxide generated from the cathode.

An embodiment of the present invention is to solve the above problems that occur when the high nickel-based cathode active material is included in the lithium secondary battery, and may include a high nickel-based cathode active material and a polyethylene glycol-based polymer as an additive for an electrolyte.

The effect of decreasing the amount of carbon dioxide generated by mixing the polyethylene glycol-based polymer with the electrolyte is very significantly implemented in the lithium secondary battery including a high nickel-based cathode as in an embodiment of the present invention.

Specifically, an embodiment of the present invention provides a lithium secondary battery including: a cathode including a cathode current collector and a cathode active material layer positioned on the cathode current collector; a nonaqueous electrolyte; and an anode, wherein the cathode active material layer includes a lithium transition metal oxide particle, and the lithium transition metal oxide particle contains a nickel (Ni) atom in an amount of 60 mol% or more with respect to a total of 100 mol% of transition metal atoms, and the nonaqueous electrolyte contains a polyethylene glycol-based polymer.

The lithium secondary battery according to an embodiment of the present invention includes the cathode active material layer including the lithium transition metal oxide particle, that is, a high nickel-based cathode active material layer in which a nickel atom is contained in an amount of 60 mol% or more with respect to a total of 100 mol% of transition metal atoms in the cathode active material layer.

In addition, the nonaqueous electrolyte may contain the polyethylene glycol-based polymer, which may suppress the carbon dioxide generated by a reaction between the electrolyte and the high nickel-based cathode active material layer having a high reactivity due to its chemically unstable state.

Therefore, it is possible to prevent deterioration of stability of the battery due to a swelling phenomenon of the lithium secondary battery caused by permeation of gas including carbon dioxide into the unit batteries of the lithium secondary battery, and to prevent deterioration in lifespan characteristics of the battery due to depletion of the electrolyte and deterioration of the electrode.

Hereinafter, the lithium secondary battery according to an embodiment of the present invention will be described in more detail.

## Cathode and Nonaqueous Electrolyte

The cathode of the lithium secondary battery according to an embodiment of the present invention may include a cathode current collector and a cathode active material layer positioned on the cathode current collector. The cathode active material layer may include a lithium transition metal oxide particle, and the lithium transition metal oxide particle may contain a nickel (Ni) atom in an amount of 60 mol% or more with respect to a total of 100 mol% of transition metal atoms.

That is, the cathode of the lithium secondary battery according to an embodiment of the present invention corresponds to a high nickel-based cathode in which the Ni atom is contained in an amount of 60 mol% or more of the transition metal atoms in the cathode active material layer. More specifically, the Ni atom may be contained in an amount of 70 mol% or more, 80 mol% or more, or 88 mol% or more.

An upper limit of a molar ratio of the Ni atom is not limited thereto, but may be 100 mol% or less or 95 mol% or less.

Accordingly, a high energy density of the lithium secondary battery may be implemented.

Meanwhile, the nonaqueous electrolyte according to an embodiment of the present invention may contain a polyethylene glycol-based polymer.

The lithium secondary battery according to an embodiment of the present invention may include the high nickel-based cathode and the nonaqueous electrolyte containing the polyethylene glycol-based polymer. Therefore, it is possible to prevent the swelling phenomenon of the battery and a decrease in capacity of the battery due to carbon dioxide generated by the depletion of the electrolyte caused by a contact and reaction between the high nickel-based cathode and the electrolyte.

Specifically, the lithium transition metal oxide particles included in the cathode active material layer are crushed by a pressure received in the rolling process performed during a cathode production, and cracks are thus generated on a surface of the lithium transition metal oxide particle. However, the polyethylene glycol-based polymer contained in the nonaqueous electrolyte is positioned in the crack of the lithium transition metal oxide particle, such that an excessive contact between the lithium transition metal oxide particle and the electrolyte positioned on a surface of the crack can be prevented. Therefore, gas such as carbon dioxide generated by the reaction between the high nickel-based cathode active material layer and the electrolyte may be suppressed, such that the swelling phenomenon may be prevented. As a result, the stability of the battery may be improved and the deterioration of the lifespan of the battery may be prevented.

In addition, the polyethylene glycol-based polymer may be positioned not only in the crack of the lithium transition

metal oxide particle, but also in a space between the lithium transition metal oxide particles and on the surface of the lithium transition metal oxide particle. Therefore, the excessive contact between the lithium transition metal oxide particle and the electrolyte may be further prevented, and gas such as carbon dioxide generated by the reaction between the high nickel-based cathode active material layer and the electrolyte may be suppressed, such that the swelling phenomenon may be prevented. As a result, the stability of the battery may be improved and the deterioration of the lifespan of the battery may be prevented.

In the lithium secondary battery according to an embodiment of the present invention, an electrode density of the cathode may be 3.3 g/cc to 4.2 g/cc. When the electrode density is within this range, the effect of decreasing the amount of gas generated such as carbon dioxide by mixing the polyethylene glycol-based polymer with the electrolyte is further significantly implemented.

Specifically, when an electrode density of the high nickel-based cathode is 3.3 g/cc or more, the amount of carbon dioxide generated is relatively large, and when the electrode density of the high nickel-based cathode is 3.3 g/cc to 4.2 g/cc, it is possible to utilize the effect of significantly decreasing the amount of carbon dioxide generated by adding the polyethylene glycol-based polymer to the electrolyte. More specifically, the electrode density of the cathode may be 3.5 g/cc to 3.8 g/cc. When the electrode density of the cathode is too small, a high energy density may not be implemented. On the other hand, when electrode density of the cathode is too large, since an excessive pressure is required during the rolling process, it may be difficult to implement the density with general rolling equipment. Furthermore, it may be difficult to control the amount of carbon dioxide generated due to excessive cracks in the cathode active material even when the polyethylene glycol-based polymer is added.

In the lithium secondary battery according to an embodiment of the present invention, the electrode density of the cathode is a value obtained by dividing the total weight of the cathode active material layer by the total volume of the cathode active material layer. For example, the electrode density of the cathode may be calculated by punching the electrode into a predetermined size and directly measuring a mass and a volume of a portion excluding a current collector.

In the lithium secondary battery according to an embodiment of the present invention, the amount of carbon dioxide generated after a high temperature storage may be 50% or less of a total amount of gas generated in the battery. This results from a decrease in the amount of carbon dioxide generated, compared to before the polyethylene glycol-based polymer is added to the electrolyte. Thus, excellent lifespan characteristics of the lithium secondary battery may be implemented, and the stability of the battery may be improved by preventing the swelling phenomenon of the battery. A lower limit thereof may be 5% or more.

In this case, for example, a lithium secondary battery subjected to a formation process is charged in a constant current (CC) mode up to 4.2 V with a current of 0.3 C-rate in a chamber of room temperature (25°C), shifts to a constant voltage (CV) mode, is completely charged under a cut-off condition of a current amount of 1/20 C, and then is stored in a convection oven of 60°C for one week, thereby being stored at a high temperature.

The lithium secondary battery after the high temperature storage is placed in an acrylic box in a vacuum state, the battery is punched so that internal and external pressures of the battery are balanced, and then a total amount (volume) (V, mL) of gas generated after the high temperature storage may be calculated according to the following Mathematical Equation 1 based on 1 atmosphere.

[Mathematical Equation 1]

$$1 \text{ atm} \times V = (P_1 - P_0) \times (V_1 - V_0)$$

($P_0$ is a pressure (atm) of the acrylic box in a vacuum state, $P_1$ is a pressure (atm) of the acrylic box after the internal and external pressures of the battery are balanced, $V_1$ is a volume (mL) of the acrylic box, and Vo is a volume (mL) of the lithium secondary battery immediately after the formation process.)

The amount of carbon dioxide generated after the high temperature storage may be calculated by gathering gas in the acrylic box, calculating a ratio of carbon dioxide to the total gas by gas chromatography, and multiplying the ratio by the total amount of gas calculated above.

An apparatus (model name: 7890A GC-TCD, manufactured by Agilent Technologies, Inc.) may be used for the gas chromatography, but is not limited thereto.

The effect of decreasing the amount of gas generated such as carbon dioxide by mixing the polyethylene glycol-based polymer with the electrolyte in the lithium secondary battery according to an embodiment of the present invention is very significantly implemented in the lithium secondary battery including the high nickel-based cathode as in the present invention.

Specifically, the amount of carbon dioxide generated after the high temperature storage of the lithium secondary battery according to an embodiment of the present invention may be decreased by 75% or more of an amount of carbon dioxide generated when the polyethylene glycol-based polymer is not contained in the nonaqueous electrolyte. More

specifically, the amount of carbon dioxide generated after the high temperature storage may be decreased by 76% to 90% or 79% to 90% of the amount of carbon dioxide generated when the polyethylene glycol-based polymer is not contained in the nonaqueous electrolyte.

In this case, a high temperature storage condition and a calculation method of the amount of carbon dioxide generated are as described above.

The amount of carbon dioxide generated in the battery is decreased, such that the swelling phenomenon may be prevented. As a result, the stability of the battery may be improved, and the deterioration of the lifespan of the battery may be prevented.

In the lithium secondary battery according to an embodiment of the present invention, the polyethylene glycol-based polymer may include not only a polymer including only - $OCH_2CH_2$ as a repeating unit, but also a polymer including 50 mol% or more, 60 mol% or more, or 70 mol% or more of $-OCH_2CH_2$ as a repeating unit in the total repeating units.

For example, the polyethylene glycol-based polymer included in the lithium secondary battery according to an embodiment of the present invention may include a polymer including 50 mol% of a repeating unit derived from ethylene glycol and 50 mol% of a repeating unit derived from propylene glycol.

As a specific example, the polyethylene glycol-based polymer may contain a compound represented by Formula 1.

[Formula 1]

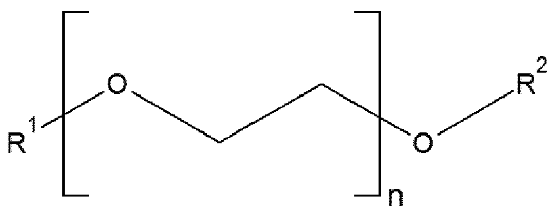

In Formula 1, n may be an integer of 5 to 100, $R^1$ may be hydrogen or a C1 to C4 linear or branched alkyl group, and $R^2$ may be hydrogen or a C1 to C4 linear or branched alkyl group.

Here, the C1 to C4 linear or branched alkyl group may be, for example, methyl, ethyl, n-propyl, isopropyl, n-butyl, sec-butyl, isobutyl, or t-butyl.

More specifically, the polyethylene glycol-based polymer may contain polyethylene glycol (PEG), polyethylene glycol monomethyl ether (mPEG), polyethylene glycol dimethyl ether (PEGDME), or a mixture thereof.

Still more specifically, the polyethylene glycol-based polymer may contain polyethylene glycol dimethyl ether (PEGDME). In the case where the polyethylene glycol-based polymer contains polyethylene glycol dimethyl ether (PEGDME), the excellent lifespan characteristics may be implemented, but the present invention is not necessarily limited thereto.

A number average molecular weight ($M_n$) of the polyethylene glycol-based polymer may be 50 g/mol to 2,000 g/mol. More specifically, the number average molecular weight ($M_n$) of the polyethylene glycol-based polymer may be 100 g/mol to 1,000 g/mol. Within this range, the polyethylene glycol-based polymer may be easily positioned in the cracks in the cathode active material, and carbon dioxide generated by the reaction between the cathode and the electrolyte may thus be suppressed, which is preferable.

In the lithium secondary battery according to an embodiment of the present invention, a content of the polyethylene glycol-based polymer may be 0.1 wt% to 10 wt% with respect to a total of 100 wt% of the nonaqueous electrolyte. In a case where the content of the polyethylene glycol-based polymer is too small, the effect of suppressing the generation of carbon dioxide when the battery is stored at a high temperature may be reduced. In a case where the content of the polyethylene glycol-based polymer is too large, a viscosity of the electrolyte is increased and lithium ion mobility is thus reduced, and as a result, a resistance of the battery is increased.

More specifically, the content of the polyethylene glycol-based polymer may be 0.1 wt% to 5 wt%, 0.5 wt% to 3 wt%, or 0.5 wt% to 2 wt%, with respect to the total of 100 wt% of the nonaqueous electrolyte.

In the lithium secondary battery according to an embodiment of the present invention, the cathode active material layer may include a lithium transition metal oxide particle represented by the following Formula 2.

[Formula 2] $Li_aNi_{1-x-y}CO_xMn_yM_zO_b$

In Formula 2, $0.5 \le a \le 1.3$, $1.9 \le b \le 2.1$, $0 \le x \le 0.4$, $0 \le y \le 0.4$, and $0 \le x+y \le 0.4$, M may be one or more materials selected from the group consisting of Al, Mg, Zr, and B, and $0 \le z \le 0.2$.

In Formula 2, x, y, and z may satisfy, more specifically, $0 \le x \le 0.3$, $0 \le y \le 0.3$, and $0 \le x+y \le 0.3$, and still more specifically, $0 \le x \le 0.2$, $0 \le y \le 0.2$, and $0 \le x+y \le 0.2$, or $0 \le x \le 0.12$, $0 \le y \le 0.12$, and $0 \le x+y \le 0.12$.

By including this lithium transition metal oxide particle as the high nickel-based cathode active material, a high energy density of the lithium secondary battery may be implemented.

In addition, the cathode active material layer may further include a lithium transition metal oxide particle represented by the following Formula 3.

[Formula 3] $Li_aNi_{1-x-y}CO_xMn_yM_zO_b$

In Formula 3, $0.5 \le a \le 1.3$, $1.9 \le b \le 2.1$, $0.25 \le x \le 0.55$, $0.25 \le y \le 0.55$, and $0.5 \le x+y \le 0.8$, M may be one or more materials selected from the group consisting of Al, Mg, Zr, and B, and $0 \le z \le 0.2$.

That is, the lithium transition metal oxide particle represented by Formula 2 may be included in the cathode active material layer alone, and a mixture of the lithium transition metal oxide particle represented by Formula 2 and the lithium transition metal oxide particle represented by Formula 3 may be included in the cathode active material layer.

In the case where the mixture of the lithium transition metal oxide particle represented by Formula 2 and the lithium transition metal oxide particle represented by Formula 3 is included in the cathode active material layer, a mixing ratio thereof may be determined so that a mole fraction of the nickel atom to the transition metal atoms in the lithium transition metal oxide particles is 60% or more.

The present invention is not necessarily limited thereto, but it may be preferable that the lithium transition metal oxide particle represented by Formula 2 is essentially included in the cathode active material layer in terms of improving the energy density.

Hereinafter, the cathode and other components of the nonaqueous electrolyte will be described.

A solvent, and if necessary, a cathode binder and a conductive material, are mixed with a cathode active material, and the mixture is stirred to prepare a slurry, a cathode current collector is coated with the slurry, dried, and then rolled to form a cathode active material layer on the cathode current collector, thereby producing the cathode.

Al or Cu may be used for the cathode current collector, but is not limited thereto.

The cathode binder serves to bond the cathode active material particles with each other well and to bond the cathode active material to the cathode current collector well. Representative examples of the cathode binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, styrene-butadiene rubber, acrylated styrene-butadiene rubber, an epoxy resin, and nylon, but are not limited thereto.

The conductive material is used for imparting electrical conductivity to an electrode. Any conductive material may be used as long as it does not cause a chemical change in a battery to be configured and has electronic conductivity. As an example, natural graphite, artificial graphite, carbon black, acetylene black, Ketjen black, carbon fiber, carbon nano-tube, and metal powder or metal fiber of copper, nickel, aluminum, silver, and the like may be used, and conductive materials such as polyphenylene derivatives may be used alone or as a mixture of two or more thereof, but the present invention is not limited thereto.

The nonaqueous electrolyte may contain a nonaqueous organic solvent and a lithium salt together with the polyethylene glycol-based polymer.

The nonaqueous organic solvent serves as a medium through which ions involved in an electrochemical reaction of a battery may migrate.

Materials commonly used in the lithium secondary battery technical field may be used for the nonaqueous organic solvent and the lithium salt, and are not limited to specific materials.

For example, the nonaqueous organic solvent may include carbonate, ester, ether, or ketone alone, or a mixed solvent thereof, but it is preferable that the nonaqueous organic solvent is selected from a cyclic carbonate-based solvent, a linear carbonate-based solvent, and a mixed solvent thereof, and it is preferable to use a mixture of the cyclic carbonate-based solvent and the linear carbonate-based solvent. The cyclic carbonate-based solvent may sufficiently dissociate lithium ions due to a large polarity, but has a disadvantage in that ion conductivity thereof is small due to a large viscosity. Therefore, characteristics of the lithium secondary battery may be optimized by using a mixture of the cyclic carbonate-based solvent and a linear carbonate-based solvent having a small polarity and a low viscosity.

The cyclic carbonate-based solvent may be selected from the group consisting of ethylene carbonate, propylene carbonate, butylene carbonate, vinylene carbonate, vinylethylene carbonate, fluoroethylene carbonate, and a mixture thereof. The linear carbonate-based solvent may be selected from the group consisting of dimethyl carbonate, diethyl carbonate, dipropyl carbonate, ethyl methyl carbonate, methyl propyl carbonate, methyl isopropyl carbonate, ethyl propyl carbonate, and a mixture thereof.

The nonaqueous organic solvent is a mixed solvent of the cyclic carbonate-based solvent and the linear carbonate-based solvent. A mixed volume ratio of the linear carbonate-based solvent to the cyclic carbonate-based solvent

may be 1:1 to 9:1 and preferably 1.5:1 to 4:1.

The lithium salt may be one or two or more selected from the group consisting of $LiPF_6$, $LiBF_4$, $LiClO_4$, $LiSbF_6$, $LiAsF_6$, $LiN(SO_2C_2F_5)_2$, $LiN(CF_3SO_2)_2$, $LiN(SO_3C_2F_5)_2$, $LiCF_3SO_3$, $LiC_4F_9SO_3$, $LiC_6H_5SO_3$, LiSCN, $LiAlO_2$, $LiAlCl_4$, LiN $(C_xF_{2x+1}SO_2)$ $(C_yF_{2y+1}SO_2)$ (here, x and y are natural numbers), LiCl, LiI, and $LiB(C_2O_4)_2$, but is not limited thereto.

A concentration of the lithium salt may be 0.1 M to 2.0 M, and more specifically, 0.7 M to 1.6 M. When the concentration of the lithium salt is less than 0.1 M, the conductivity of the electrolyte is decreased, and a performance of the electrolyte thus deteriorates. When the concentration of the lithium salt is more than 2.0 M, the viscosity of the electrolyte is increased, and the mobility of the lithium ion may thus be reduced. The lithium salt acts as a supply source of the lithium ion in the battery to enable a basic operation of the lithium secondary battery.

## Anode

In the lithium secondary battery according to an embodiment of the present invention, the anode includes an anode current collector and an anode active material layer positioned on the anode current collector. The anode active material layer may include an anode active material.

A solvent, and if necessary, an anode binder and a conductive material, are mixed with an anode active material, and the mixture is stirred to prepare a slurry, an anode current collector is coated with the slurry, dried, and then rolled to form an anode active material layer on the anode current collector, thereby producing the anode.

Hereinafter, the anode will be described in detail, but the present invention is not limited thereto.

Examples of the anode active material may include a material capable of reversibly intercalating/deintercalating lithium ions, a lithium metal, a lithium metal alloy, a material capable of doping and dedoping lithium, and a transition metal oxide.

The material capable of reversibly intercalating/deintercalating lithium ions is a carbon material, and any carbon-based anode active material generally used in the lithium ion secondary battery may be used. Specific examples of the carbon material may include crystalline carbon such as amorphous, plate-shaped, flake, spherical, or fibrous natural graphite or artificial graphite, amorphous carbon such as soft carbon or hard carbon, and combinations thereof.

The lithium metal alloy may be an alloy of lithium and a metal of Na, K, Rb, Cs, Fr, Be, Mg, Ca, Sr, Si, Sb, Pb, In, Zn, Ba, Ra, Ge, Al, or Sn.

The material capable of doping and dedoping lithium may be Si, $SiO_x$ ($0<x<2$), a Si-C composite, Sn, $SnO_2$, or a Sn-C composite.

The transition metal oxide may be vanadium oxide or lithium vanadium oxide.

The anode binder serves to bond anode active material particles with each other well and to bond the anode active material to the anode current collector well. A non-water-soluble binder, a water-soluble binder, or a combination thereof may be used as the anode binder.

Examples of the non-water-soluble binder may include polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, and combinations thereof.

Examples of the water-soluble binder may include styrene-butadiene rubber, acrylated styrene-butadiene rubber, polyvinylalcohol, sodium polyacrylate, a copolymer of propylene and a C2 to C8 olefin, a copolymer of (meth) acrylic acid and (meth)acrylic acid alkyl ester, and combinations thereof.

When the water-soluble binder is used as the anode binder, a cellulose-based compound capable of imparting a viscosity may be further added. One or two or more selected from the group consisting of carboxymethyl cellulose, hydroxypropylmethyl cellulose, methyl cellulose and alkali metal salts thereof may be used as the cellulose-based compound. Na, K, or Li may be used as the alkali metal.

The conductive material is used for imparting electrical conductivity to an electrode. Any conductive material may be used as long as it does not cause a chemical change in a battery to be configured and has electronic conductivity. Examples of the conductive material may include a carbon-based material such as natural graphite, artificial graphite, carbon black, acetylene black, Ketjen black, carbon fiber, or carbon nano-tube; a metal-based material such as metal powder or metal fiber of copper, nickel, aluminum, or silver; a conductive polymer such as a polyphenylene derivative; and a mixture thereof.

The anode current collector may be selected from the group consisting of a copper foil, a nickel foil, a stainless steel foil, a titanium foil, a nickel foam, a copper foam, a polymer substrate coated with a conductive metal, and combinations thereof.

## Separator and Lithium Secondary Battery

The lithium secondary battery according to an embodiment of the present invention may further include a separator between the cathode and the anode. As the separator, a polyethylene, polypropylene, or polyvinylidene fluoride

separator or a multilayer film including two or more layers thereof may be used, and a mixed multilayer film such as a polyethylene/polypropylene two-layer separator, a polyethylene/polypropylene/polyethylene three-layer separator, or a polypropylene/polyethylene/polypropylene three-layer separator may be used, but the present invention is not particularly limited thereto.

In addition, in order to increase the stability of the lithium secondary battery, a separator obtained by coating one surface or both surfaces of the separator with an inorganic-containing layer including a ceramic particle such as alumina may be used. However, the present invention is not limited thereto.

As the lithium secondary battery according to an embodiment of the present invention, any battery such as a coin type, button type, sheet type, laminated type, cylindrical type, flat type, or prismatic type battery may be used. The battery may be produced by assembling the cathode, the anode, the nonaqueous electrolyte, and the separator as known in the art depending on a desired battery shape.

Hereinafter, preferred examples and a preferred comparative example of the present invention will be described. However, the following examples are merely preferred examples of the present invention, and the present invention is not limited to the following examples.

Method for Producing Lithium Secondary Battery

(1) 95 parts by weight of a NCM-based cathode active material particle, 2.0 parts by weight of a carbon black conductive material, 1.0 part by weight of a graphite-based conductive material, 2.0 parts by weight of a PVDF binder, and N-methyl-2-pyrrolidone (NMP) as a solvent were mixed with each other, thereby preparing a cathode slurry. An aluminum thin film having a thickness of 12 um was coated with the cathode slurry so that a mass of the coated cathode slurry per unit area was 20 mg/cm$^2$, and then the aluminum thin film was passed through a hot air drying furnace of 120°C, thereby producing a cathode coated electrode. The cathode coated electrode was rolled with a rolling press machine so that the cathode coated electrode attained a density of 3.6 g/cc or more, thereby producing a final cathode.

To 92.3 parts by weight of an anode active material in which natural graphite and artificial graphite were mixed with each other at a predetermined ratio, 5 parts by weight of a graphite-based conductive material, 1.2 parts by weight of carboxymethylcellulose, 1.5 parts by weight of styrene-butadiene rubber, and pure water were added, thereby preparing an anode slurry. A copper thin film having a thickness of 6 um was uniformly coated with the anode slurry, and then the copper thin film was passed through a hot air drying furnace of 120°C, thereby producing an anode coated electrode. The anode coated electrode was sufficiently rolled with a rolling press machine, thereby producing a final anode.

After the cathode and the anode each were punched into a predetermined size, and the obtained cathode, the obtained anode, and a separator obtained by coating a polyethylene resin with ceramic powder were sequentially stacked, thereby preparing a jelly roll. The prepared jelly roll was inserted into a pouch formed into a suitable size, cathode and anode tabs were welded, and then a carbonate-based electrolyte (electrolyte 1) was injected into the pouch. A lithium ion battery in which the electrolyte was injected was subjected to an initial charge and a room temperature aging process, charged up to 4.0 V to 4.1 V with 0.1 C-rate, and then subjected to a secondary aging at a high temperature of 40°C to 45°C. The lithium ion battery subjected to the high temperature aging was subjected to a formation charge and discharge process once, thereby producing a final lithium ion battery.

(2) 1 wt% polyethylene glycol having a number average molecular weight of 400 was added to the electrolyte 1, and then the mixture was sufficiently stirred (electrolyte 2). A lithium ion battery was produced in the same manner as that of (1) above except that the electrolyte 2 was used instead of the electrolyte 1.

(3) 1 wt% polyethylene glycol dimethyl ether having a number average molecular weight of 500 was added to the electrolyte 1, and then the mixture was sufficiently stirred (electrolyte 3). A lithium ion battery was produced in the same manner as that of (1) above except that the electrolyte 3 was used instead of the electrolyte 1.

Discharge Capacity and Energy Density Per Volume

The produced lithium ion battery was charged in a CC mode up to 4.2 V with a current of 0.3 C-rate in a chamber of room temperature (25°C), shifted to a CV mode, and then was completely charged under a cut-off condition of a current amount of 1/20 C. After a rest period for 30 minutes, the lithium ion battery was discharged in a CC mode up to 2.5 V, and a discharge capacity at this time was measured. An energy density per volume was calculated by multiplying the measured discharge capacity by an average voltage during the discharge and dividing the obtained value by a volume of the lithium ion battery.

Amount of Gas Generated After High Temperature Storage

The produced lithium ion battery was charged in a CC mode up to 4.2 V with a current of 0.3 C-rate in a chamber of room temperature (25°C), shifted to a CV mode, and then was completely charged under a cut-off condition of a current amount of 1/20 C. The charged lithium ion battery was stored in a convection oven of 60°C for one week.
The lithium ion battery after the high temperature storage was placed in a sealed acrylic box in a vacuum state, the pouch was punched by a needle to make internal and external pressures balance, and then a pressure of the acrylic box was confirmed.
In this case, a pressure was defined as $P_1$ (atm), a pressure of the acrylic box in an initial vacuum state was defined as $P_0$ (atm), a volume of the acrylic box was defined as $V_1$ (mL), a volume of a fresh battery immediately after the formation process was defined as Vo (mL), and then a total volume (V, mL) of gas was calculated according to the following equation based on 1 atmosphere.

$$1 \text{ atm} \times V = (P_1 - P_0) \times (V_1 - V_0)$$

In this case, 20 mL of the generated gas was gathered, and a ratio of carbon dioxide to the total amount of gas was confirmed by gas chromatography (model name: 7890A GC-TCD, manufactured by Agilent Technologies, Inc.).
Finally, a total amount of carbon dioxide generated in the lithium ion battery was calculated by multiplying a volume of the total gas by the ratio of the carbon dioxide measured by the gas chromatography.

Capacity Retention Rate After 200 Charge/Discharge Cycles at 45°C

The produced lithium ion battery was charged in a CC mode up to 4.2 V with a current of 1.0 C-rate in a chamber of a high temperature (45°C), shifted to a CV mode, and then was completely charged under a cut-off condition of a current amount of 1/20 C. A process in which the lithium ion battery is discharged in a CC mode up to 2.5 V after a rest period for 30 minutes, and then is charged again after a rest period for 30 minutes was repeated 200 times. In this case, a ratio of a discharge capacity at the $200^{th}$ cycle to the initial discharge capacity was calculated and then was defined as a capacity retention rate [%] after 200 cycles.

[Example 1]

70 wt% of a NCM-based cathode active material in which a content of Ni was 83 mol% with respect to a total number of moles of Ni, Co, and Mn, and 30 wt% of a NCM-based cathode active material in which a content of Ni was 50 mol% with respect to a total number of moles of Ni, Co, and Mn were mixed with each other, thereby producing a lithium ion battery according to the method of producing a lithium secondary battery described above. At this time, the calculated final content of Ni in the cathode active material was 73.1 mol%.
According to the method described above, for the produced lithium ion battery, a discharge capacity of 0.3 C, the total amount of gas generated after the high temperature storage, a ratio of carbon dioxide to the total gas, the amount of carbon dioxide, and a capacity retention rate after 200 charge/discharge cycles at 45°C were measured.

[Example 2]

A lithium ion battery was produced and evaluated in the same manner as that of Example 1 except that a NCM-based cathode active material in which a content of Ni was 80 mol% was used.

[Example 3]

A lithium ion battery was produced and evaluated in the same manner as that of Example 1 except that a NCM-based cathode active material in which a content of Ni was 83 mol% was used.

[Example 4]

A lithium ion battery was produced and evaluated in the same manner as that of Example 1 except that a NCM-based cathode active material in which a content of Ni was 88 mol% was used.

[Example 5]

A lithium ion battery was produced and evaluated in the same manner as that of Example 1 except that a NCM-based cathode active material in which a content of Ni was 60 mol% was used.

[Example 6]

A lithium ion battery was produced and evaluated in the same manner as that of Example 1 except that the cathode was rolled to have an electrode density of 3.3 g/cc.

[Example 7]

A lithium ion battery was produced and evaluated in the same manner as that of Example 1 except that the cathode was rolled to have an electrode density of 2.98 g/cc.

[Example 8]

A lithium ion battery was produced and evaluated in the same manner as that of Example 1 except that the lithium ion battery in which the electrolyte was injected was subjected to an initial charge and a room temperature aging process, and then subjected to a formation charge and discharge process without performing a process of charging the battery up to 4.0 V to 4.1 V with 0.1 C-rate and a secondary aging process at a high temperature of 40 to 45°C.

[Example 9]

A lithium ion battery was produced and evaluated in the same manner as that of Example 1 except that an electrolyte in which 3 wt% polyethylene glycol having a number average molecular weight of 400 was added was used instead of the electrolyte 2, and an electrolyte in which 3 wt% polyethylene glycol dimethyl ether having a number average molecular weight of 500 was added was used instead of the electrolyte 3.

[Comparative Example 1]

A lithium ion battery was produced and evaluated in the same manner as that of Example 1 except that a NCM-based cathode active material in which a content of Ni was 50 mol% was used.

The total amount of gas, a ratio of carbon dioxide to the total gas, the amount of carbon dioxide, a reduction amount of carbon dioxide after addition of PEG or PEGDME, and a capacity retention rate after 200 charge/discharge cycles at 45°C measured in each of Examples 1 to 8 and Comparative Example 1 are shown in Tables 1 to 3.

[Table 1]

| Classification | | Example 1 | Example 2 | Example 3 | Example 4 |
|---|---|---|---|---|---|
| Design and performance | Cathode active material #1 (content, wt%) | Ni83 (70) | Ni80 (100) | Ni83 (100) | Ni88 (100) |
| | Cathode active material #2 (content, wt%) | Ni50 (30) | | | |
| | Content of Ni in cathode active material (mol%) | 73.1 | 80 | 83 | 88 |
| | Cathode density (g/cc) | 3.61 | 3.74 | 3.7 | 3.63 |
| | Energy density per volume (Wh/L) | 606 | 646 | 657 | 675 |
| | High temperature aging process during formation | 4.0 V 40°C 24hr aging | 4.1 V 45°C 24hr aging | 4.1 V 40°C 24hr aging | 4.0 V 45°C 24hr aging |

(continued)

| Classification | | Example 1 | Example 2 | Example 3 | Example 4 |
|---|---|---|---|---|---|
| (1) Non-addition of additive | Gas after storing charged battery at 60°C for one week (mL) | 120.04 | 168.96 | 170.61 | 175.29 |
| | $CO_2$ after storing charged battery at 60°C for one week (mL) | 85.2 | 129.85 | 136.15 | 132.05 |
| | $CO_2$/Total gas (%) | 71% | 77% | 80% | 75% |
| | Capacity retention rate after 200 cycles with 1 C at 45°C | 84% | 85% | 83% | 83% |
| (2) Addition of PEG | Gas after storing charged battery at 60°C for one week (mL) | 49.56 | 57.11 | 49.99 | 59.25 |
| | $CO_2$ after storing charged battery at 60°C for one week (mL) | 8.34 | 19.59 | 14.22 | 25.11 |
| | $CO_2$/Total gas (%) | 17% | 34% | 28% | 42% |
| | Reduction amount of $CO_2$ when adding PEG (%) | 90% | 85% | 90% | 81% |
| | Capacity retention rate after 200 cycles with 1 C at 45°C | 92% | 92% | 91% | 91% |
| (3) Addition of PEGDME | Gas after storing charged battery at 60°C for one week (mL) | 42.63 | 60.59 | 62.55 | 63.91 |
| | $CO_2$ after storing charged | 13.74 | 22.8 | 26.4 | 28.26 |
| | battery at 60°C for one week (mL) | | | | |
| | $CO_2$/Total gas (%) | 32% | 38% | 42% | 44% |
| | Reduction amount of $CO_2$ when adding PEGDME (%) | 84% | 82% | 81% | 79% |
| | Capacity retention rate after 200 cycles with 1 C at 45°C | 95% | 95% | 95% | 94% |

[Table 2]

| Classification | | Example 5 | Example 6 | Example 7 | Example 8 |
|---|---|---|---|---|---|
| Design and performance | Cathode active material #1 (content, wt%) | Ni60 (100) | Ni83 (70) | Ni83 (70) | Ni83 (70) |
| | Cathode active material #2 (content, wt%) | - | Ni50 (30) | Ni50 (30) | Ni50 (30) |
| | Content of Ni in cathode active material (mol%) | 60 | 73.1 | 73.1 | 73.1 |
| | Cathode density (g/cc) | 3.69 | 3.3 | 2.98 | 3.61 |
| | Energy density per volume (Wh/L) | 557 | 554 | 500 | 606 |
| | High temperature aging process during formation | 4.0 V 45°C 24hr aging | 4.0 V 40°C 24hr aging | 4.1 V 45°C 24hr aging | 4.0 V 45°C aging X |
| (1) Non-addition of additive | Gas after storing charged battery at 60°C for one week (mL) | 100.03 | 75.4 | 42.3 | 149.68 |
| | $CO_2$ after storing charged battery at 60°C for one week (mL) | 64.8 | 35.8 | 8.1 | 112.87 |
| | $CO_2$/Total gas (%) | 65% | 47% | 19% | 75% |
| | Capacity retention rate after 200 cycles with 1 C at 45°C | 89% | 90% | 96% | 89% |
| (2) Addition of PEG | Gas after storing charged battery at 60°C for one week (mL) | 39.57 | 40.1 | 38.55 | 83.27 |
| | $CO_2$ after storing charged battery at 60°C for one week (mL) | 10.1 | 8.57 | 3.3 | 46.31 |
| | $CO_2$/Total gas (%) | 26% | 21% | 9% | 56% |
| | Reduction amount of $CO_2$ when adding PEG (%) | 84% | 76% | 59% | 59% |
| | Capacity retention rate after 200 cycles with 1 C at 45°C | 92% | 93% | 93% | 90% |
| (3) Addition of PEGDME | Gas after storing charged battery at 60°C for one week (mL) | 42.27 | 39.9 | 35.49 | 86.45 |
| | $CO_2$ after storing charged battery at 60°C for one week (mL) | 10.5 | 6.8 | 3.2 | 48.09 |
| | $CO_2$/Total gas (%) | 25% | 17% | 9% | 56% |
| | Reduction amount of $CO_2$ when adding PEGDME (%) | 84% | 81% | 60% | 57% |
| | Capacity retention rate after 200 cycles with 1 C at 45°C | 96% | 96% | 96% | 92% |

[Table 3]

| Classification | | Example 9 | Comparative Example 1 |
|---|---|---|---|
| Design and performance | Cathode active material #1 (content, wt%) | Ni83 (70) | Ni50 (100) |
| | Cathode active material #2 (content, wt%) | Ni50 (30) | - |
| | Content of Ni in cathode active material (mol%) | 73.1 | 50 |
| | Cathode density (g/cc) | 3.61 | 3.69 |
| | Energy density per volume (Wh/L) | 606 | 537 |
| | High temperature aging process during formation | 4.0 V 45°C 24hr aging | 4.0 V 40°C 24hr aging |
| (1) Non-addition of additive | Gas after storing charged battery at 60°C for one week (mL) | 120.04 | 54.2 |
| | $CO_2$ after storing charged battery at 60°C for one week (mL) | 85.2 | 18.6 |
| | $CO_2$/Total gas (%) | 71% | 34% |
| | Capacity retention rate after 200 cycles with 1 C at 45°C | 84% | 97% |
| (2) Addition of PEG | Gas after storing charged battery at 60°C for one week (mL) | 43.72 | 41.38 |
| | $CO_2$ after storing charged battery at 60°C for one week (mL) | 7.07 | 9.57 |
| | $CO_2$/Total gas (%) | 16% | 23% |
| | Reduction amount of $CO_2$ when adding PEG (%) | 92% | 49% |
| | Capacity retention rate after 200 cycles with 1 C at 45°C | 89% | 94% |
| (3) Addition of PEGDME | Gas after storing charged battery at 60°C for one week (mL) | 49.36 | 38.92 |
| | $CO_2$ after storing charged battery at 60°C for one week (mL) | 10.82 | 11.3 |
| | $CO_2$/Total gas (%) | 22% | 29% |
| | Reduction amount of $CO_2$ when adding PEGDME (%) | 87% | 39% |
| | Capacity retention rate after 200 cycles with 1 C at 45°C | 94% | 96% |

As shown in Tables 1 to 3, it could be confirmed that in Examples 1 to 9 of the present invention in which PEG or PEGDME was added to 60 mol% or more of a high nickel-based cathode, the amount of carbon dioxide generated after the high temperature storage was significantly decreased, and the capacity retention rate after 200 charge/discharge cycles at 45°C was significantly increased. In addition, as the amount of carbon dioxide generated was decreased, the stability of the battery was improved.

More specifically, in Examples 1 to 6, and 9 of the present invention, before adding PEG or PEGDME, the amount of carbon dioxide generated after the high temperature storage was larger than those in Example 7 in which a cathode density was small and Comparative Example 1 in which a low nickel-based cathode was included, but after

adding PEG or PEGDME, the amount of carbon dioxide generated was remarkably decreased.

In addition, with reference to Examples 1 to 5 and Examples 9 and 6, when the cathode density was more than 3.3 g/cc, before adding PEG or PEGDME, the amount of carbon dioxide generated was large, whereas after adding PEG or PEGDME, the amount of carbon dioxide generated was remarkably decreased.

In addition, in Examples 1 to 6, and 9 of the present invention, after adding PEG or PEGDME, the amount of carbon dioxide generated after the high temperature storage was 50% or less of the total amount of gas generated. It could be confirmed from this that the lifespan characteristics were further improved as compared to those in Example 8.

In addition, it could be confirmed that in the Examples 1 to 6, and 9 of the present invention in which PEG or PEGDME was added, the amount of carbon dioxide generated was decreased by 75% or more, compared to before PEG or PEGDME was added.

In addition, when PEGDME was added, the effect of improving the lifespan characteristics was relatively excellent.

According to an embodiment of the present invention, there is provided a lithium secondary battery of which swelling, explosion, and deterioration in lifespan characteristics caused by gas generated in the battery in a high temperature environment may be prevented, while adopting a high nickel-based cathode active material having a high nickel content.

Therefore, the high energy density of the lithium secondary battery may be implemented, and the stability of the battery and the lifespan characteristics during charge and discharge may be significantly improved.

## Claims

1. A lithium secondary battery comprising:

   a cathode including a cathode current collector and a cathode active material layer positioned on the cathode current collector;
   a nonaqueous electrolyte; and
   an anode,
   wherein the cathode active material layer includes a lithium transition metal oxide particle, and the lithium transition metal oxide particle contains a nickel (Ni) atom in an amount of 60 mol% or more with respect to a total of 100 mol% of transition metal atoms, and
   the nonaqueous electrolyte contains a polyethylene glycol-based polymer.

2. The lithium secondary battery of claim 1, wherein an electrode density of the cathode is 3.3 g/cc to 4.2 g/cc.

3. The lithium secondary battery of claim 2, wherein the electrode density of the cathode is 3.5 g/cc to 3.8 g/cc.

4. The lithium secondary battery of claim 1, wherein the lithium transition metal oxide particle contains the nickel (Ni) atom in an amount of 80 mol% or more with respect to the total of 100 mol% of the transition metal atoms.

5. The lithium secondary battery of claim 4, wherein the lithium transition metal oxide particle contains the nickel (Ni) atom in an amount of 88 mol% or more with respect to the total of 100 mol% of the transition metal atoms.

6. The lithium secondary battery of claim 1, wherein after the lithium secondary battery is charged in a constant current (CC) mode up to 4.2 V with a current of 0.3 C-rate at 25°C, shifts to a constant voltage (CV) mode, is completely charged under a cut-off condition of a current amount of 1/20 C, and is stored at 60°C for one week, an amount of carbon dioxide generated is 50% or less of a total amount of gas generated in the battery.

7. The lithium secondary battery of claim 1, wherein after the lithium secondary battery is charged in a constant current (CC) mode up to 4.2 V with a current of 0.3 C-rate at 25°C, shifts to a constant voltage (CV) mode, is completely charged under a cut-off condition of a current amount of 1/20 C, and is stored at 60°C for one week, an amount of carbon dioxide generated in the battery is decreased by 75% or more of an amount of carbon dioxide generated when the polyethylene glycol-based polymer is not contained in the nonaqueous electrolyte.

8. The lithium secondary battery of claim 1, wherein a crack is present on a surface of the lithium transition metal oxide particle, and the polyethylene glycol-based polymer is present in the crack.

9. The lithium secondary battery of claim 1, wherein the polyethylene glycol-based polymer contains a compound

represented by the following Formula 1,

[Formula 1]

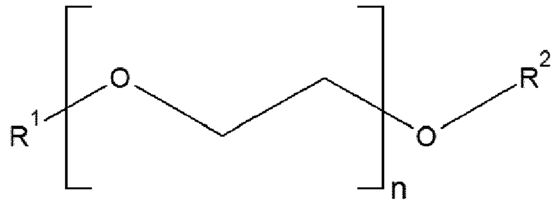

in Formula 1, n is an integer of 5 to 100, $R^1$ is hydrogen or a C1 to C4 linear or branched alkyl group, and $R^2$ is hydrogen or a C1 to C4 linear or branched alkyl group.

**10.** The lithium secondary battery of claim 1, wherein a number average molecular weight ($M_n$) of the polyethylene glycol-based polymer is 50 g/mol to 2,000 g/mol.

**11.** The lithium secondary battery of claim 9, wherein the polyethylene glycol-based polymer contains polyethylene glycol (PEG), polyethylene glycol dimethyl ether (PEGDME), or a mixture thereof.

**12.** The lithium secondary battery of claim 11, wherein the polyethylene glycol-based polymer contains polyethylene glycol dimethyl ether (PEGDME).

**13.** The lithium secondary battery of claim 1, wherein a content of the polyethylene glycol-based polymer is 0.1 wt% to 10 wt% with respect to a total of 100 wt% of the nonaqueous electrolyte.

**14.** The lithium secondary battery of claim 1, wherein the cathode active material layer includes a lithium transition metal oxide particle represented by the following Formula 2,

[Formula 2] $Li_aNi_{1-x-y}CO_xMn_yM_zO_b$

in Formula 2, $0.5 \le a \le 1.3$, $1.9 \le b \le 2.1$, $0 \le x \le 0.4$, $0 \le y \le 0.4$, and $0 \le x+y \le 0.4$, M is one or more materials selected from the group consisting of Al, Mg, Zr, and B, and $0 \le z \le 0.2$.

Europäisches Patentamt
European Patent Office
Office européen des brevets

# EUROPEAN SEARCH REPORT

Application Number
EP 20 17 0221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 642 578 A1 (HITACHI VEHICLE ENERGY LTD [JP]) 25 September 2013 (2013-09-25)<br>* abstract *<br>* paragraphs [0051] - [0057] *<br>* paragraphs [0065] - [0073] *<br>----- | 1-14 | INV.<br>H01M10/052<br>H01M10/0567 |
| Y | KR 2019 0008099 A (LG CHEMICAL LTD [KR]) 23 January 2019 (2019-01-23)<br>* abstract *<br>* paragraphs [0113] - [0115] *<br>* claims 1-8 *<br>----- | 1-14 | |
| Y | US 2003/124433 A1 (KIM JU-YUP [KR] ET AL) 3 July 2003 (2003-07-03)<br>* abstract *<br>* paragraphs [0026] - [0039] *<br>* claims 1-20 *<br>* paragraphs [0079] - [0083] *<br>----- | 1-14 | |
| Y | US 2016/285128 A1 (MATSUI TORU [JP] ET AL) 29 September 2016 (2016-09-29)<br>* paragraphs [0068] - [0072] *<br>----- | 1-14 | TECHNICAL FIELDS SEARCHED (IPC) |
| Y | US 2018/294474 A1 (ZHAMU ARUNA [US] ET AL) 11 October 2018 (2018-10-11)<br>* paragraphs [0014] - [0034]; claims 1-27 *<br>----- | 1-14 | H01M |
| A | EP 3 076 473 A1 (LG CHEMICAL LTD [KR]) 5 October 2016 (2016-10-05)<br>* abstract *<br>* claims 1-13 *<br>* paragraphs [0020] - [0027] *<br>* compound 1 *<br>----- | 1-14 | |

The present search report has been drawn up for all claims

1

| Place of search | Date of completion of the search | Examiner |
|---|---|---|
| Munich | 14 July 2020 | Stachowiak, Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 17 0221

This annex lists the patent family members relating to the patent documents cited in the above-mentioned European search report. The members are as contained in the European Patent Office EDP file on
The European Patent Office is in no way liable for these particulars which are merely given for the purpose of information.

14-07-2020

| Patent document cited in search report | Publication date | Patent family member(s) | Publication date |
|---|---|---|---|
| EP 2642578 A1 | 25-09-2013 | CN 103222101 A | 24-07-2013 |
| | | EP 2642578 A1 | 25-09-2013 |
| | | JP 5538563 B2 | 02-07-2014 |
| | | JP WO2012066663 A1 | 12-05-2014 |
| | | US 2013295447 A1 | 07-11-2013 |
| | | WO 2012066663 A1 | 24-05-2012 |
| KR 20190008099 A | 23-01-2019 | CN 109891657 A | 14-06-2019 |
| | | EP 3509155 A1 | 10-07-2019 |
| | | JP 2020501303 A | 16-01-2020 |
| | | KR 20190008099 A | 23-01-2019 |
| | | US 2020044286 A1 | 06-02-2020 |
| US 2003124433 A1 | 03-07-2003 | CN 1416191 A | 07-05-2003 |
| | | JP 3643825 B2 | 27-04-2005 |
| | | JP 2003151626 A | 23-05-2003 |
| | | KR 20030035521 A | 09-05-2003 |
| | | US 2003124433 A1 | 03-07-2003 |
| US 2016285128 A1 | 29-09-2016 | CN 106025270 A | 12-10-2016 |
| | | JP 6620028 B2 | 11-12-2019 |
| | | JP 2016184572 A | 20-10-2016 |
| | | US 2016285128 A1 | 29-09-2016 |
| US 2018294474 A1 | 11-10-2018 | CN 110720153 A | 21-01-2020 |
| | | JP 2020517055 A | 11-06-2020 |
| | | KR 20190132496 A | 27-11-2019 |
| | | US 2018294474 A1 | 11-10-2018 |
| | | US 2020091507 A1 | 19-03-2020 |
| | | WO 2018191026 A1 | 18-10-2018 |
| EP 3076473 A1 | 05-10-2016 | CN 105934848 A | 07-09-2016 |
| | | EP 3076473 A1 | 05-10-2016 |
| | | JP 6671724 B2 | 25-03-2020 |
| | | JP 2017532740 A | 02-11-2017 |
| | | KR 20160037101 A | 05-04-2016 |
| | | TW 201633595 A | 16-09-2016 |
| | | US 2016329601 A1 | 10-11-2016 |

EPO FORM P0459

For more details about this annex : see Official Journal of the European Patent Office, No. 12/82